# EUROPEAN PATENT APPLICATION

(11) **EP 3 272 559 A1**
(43) Date of publication of application: **24.01.2018**
(21) Application number: 17181147.4
(22) Date of filing: 13.07.2017
(51) Int. Cl.: B60C 23/04

(54) **REINFORCED VALVE GROUP FOR INFLATING TYRES**

(30) Priority: 22.07.2016 IT 201600077276
(71) Applicant: Wonder SPA, 26100 Cremona (CR) (IT)
(72) Inventor: CAZZANTI, Stefano, 26100 Cremona (IT); GOSI, Matteo, 26100 Cremona (IT)
(74) Representative: Gualeni, Nadia

(57) **Abstract**

The invention relates to a reinforced valve group for inflating tyres, suitable to be stably associated to a transducer for TPMS technology. Such a group comprises a valve, with a hole 114 provided with an internal thread 214 and a stem 18 provided with an external thread 215, and a locking nut 5 screwed on the external thread 215 of stem 18 of valve 1. The group is provided with a reinforcement area 17 formed by an overlapping portion Ls between the external thread 215 and the internal thread 214, so that, once screwed, the locking nut 5 overlaps at least partially the internal thread 214. In addition, during the screwing of a fastening screw 4 of transducer 3, such a screw goes back up in correspondence with the external thread 215, and continues beyond, thereby acting as a support and reinforcement at a critical point of the valve (1).

## Description

The present invention relates to a reinforced valve group for inflating tyres, in particular of the type associable to a TPMS transducer.

The reference sector is therefore that of valves for inflating tyres of rubber wheels of motor vehicles, such as vans, trucks, motorcycles.

In this field, it is known to use valves associated with the TPMS (Tyre Pressure Monitoring System) technology, wherein electronic sensors for the detection and transmission of some of the operating parameters of the tyres, in particular pressure (but also temperature), are mounted directly onto the same valve, which is secured to the wheel by means of a hole made in the rim.

Such valves generally consist of a shaped head, usually cylindrical or semi-spherical or polygonal in shape, intended to be associated to a transducer containing the electronic sensors, and a shank (or stem) of elongated shape which allows the inflation/deflation operations of the tyre and the fastening of the valve itself to the rim of the wheel by means of suitable screw locking means.

These screw locking means generally consist of a nut which is screwed on a female thread formed on the shank portion of the valve protruding from the rim outwards.

Operationally, the valve and the transducer are first assembled together in a valve-transducer group by means of a fastening screw. Such a screw is generally provided with a head which can be fixed in an appropriate seat provided on the transducer, and a shank screwable within the shaped head of the valve.

In a next step, the valve-transducer group is positioned on the wheel rim so that the valve is protruding outside of the rim and the transducer is housed inside the tyre.

The tightening of the valve-transducer group on the rim takes place by means of the nut which, screwed on the valve stem, makes the valve head abut, with the interposition of a sealing gasket on the inner edge of the rim.

Known valves are subject to possible damage during the final tightening of the nut with which the valve-transducer group is fixed to the rim: an incorrect dosage of the clamping force is likely to subject the valve to an excessive traction, in particular at the point of contact with the rim itself. In fact, just in correspondence of the attachment area to the rim, the valve is subjected to opposing forces exerted by the fastening screw of the transducer and by the locking nut, respectively.

Additionally, the centrifugal forces involved, the vibrations and any shocks of the vehicle while driving can increase the risk of breakage of the valve.

Therefore, in the field of valves for inflating vehicle tyres, it is felt the need to have highly reliable and high fatigue and traction resistance valves.

This need is met by a reinforced valve group according to claim 1, as well as a valve-transducer group according to claim 9. Other embodiments of the reinforced valve group according to the invention are described in the subsequent claims.

Further features and advantages of the present invention will appear more clearly from the following description of a preferred non-limiting embodiment thereof, in which:
- figures 1 and 2 show a perspective and a sectional view, respectively, of a valve-transducer group for TPMS systems mounted on a rim of a wheel;
- figure 3 shows a perspective view of the valve-transducer group;
- figure 4 shows a sectional view of the valve group according to the present invention in a preferred embodiment;
- figure 5 shows a sectional view of the valve group according to the present invention in a further embodiment;
- figures 6 and 7 show a valve according to the present invention, according to two possible embodiment variants;
- figures 8 and 9 show a valve according to the present invention, according to further embodiment variants.

In the above figures, equivalent or similar elements will be indicated by the same reference numerals.

With reference to the above figures, reference numeral 1 generally indicates a valve 1 for inflating tyres 2 adapted to be stably associated to a transducer 3 for TPMS technology.

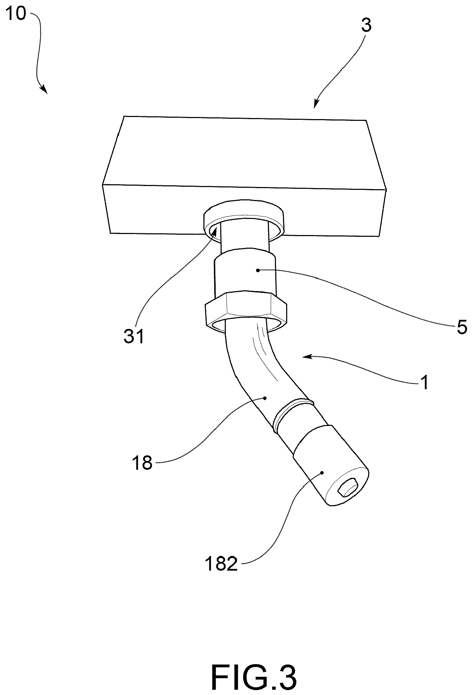

Figure 3 shows the reinforced valve group and transducer 3 assembled together to form a valve-transducer group 10.

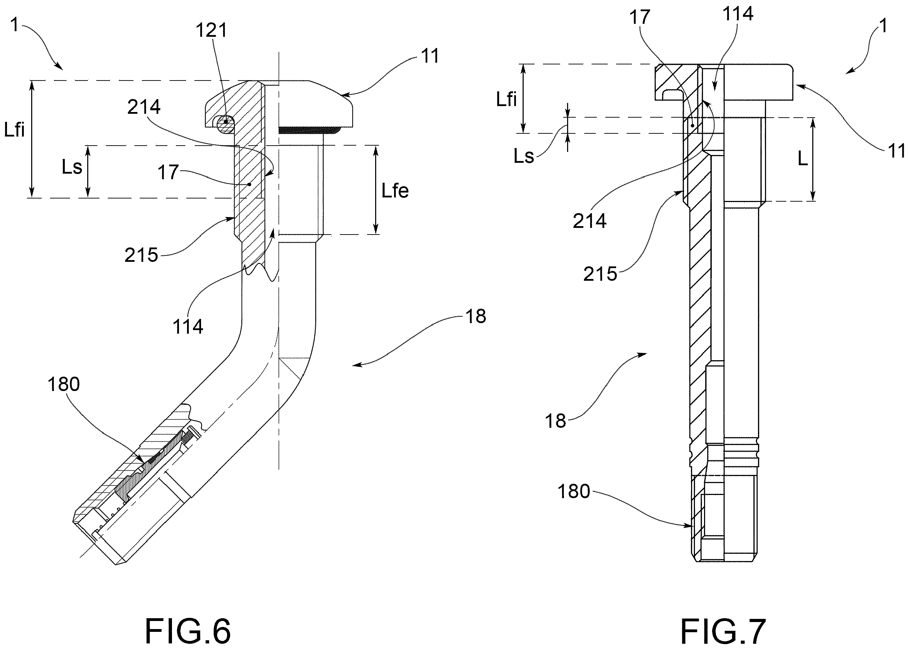

Figures 6 and 7 show two exemplary embodiments of valve 1 according to the present invention.

Valve 1 comprises a head 11 below which extends a stem 18. In the embodiment variant shown in figure 6, stem 18 is curved, or has a certain curvature; in the embodiment shown in figure 7, stem 18 is straight or rectilinear.

Stem 18 comprises a terminal portion provided with a mechanism 180 for the inflation/deflation of the tyre. Preferably, the terminal portion is closed by a cover 182.

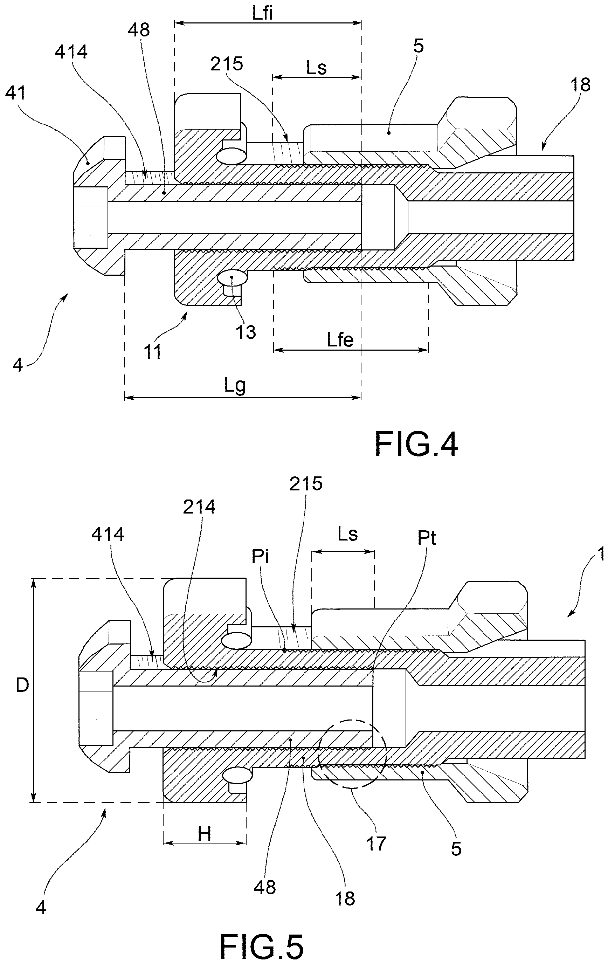

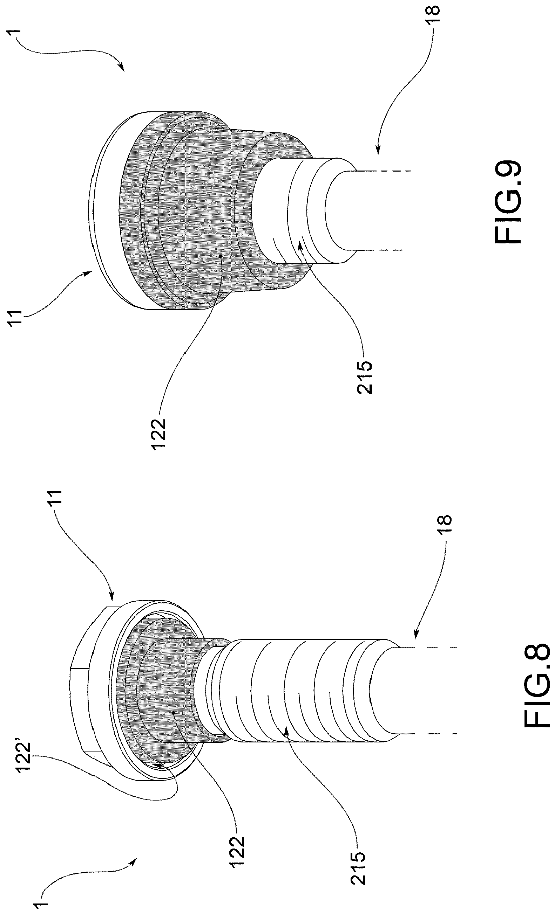

With reference to figure 6, valve 1 is provided with a radiused head 11. Alternative shapes of valve 1 may include cylindrical heads 11 (see for example figures 4, 5, and 9) or polygonal heads (see for example figure 8).

For its coupling to transducer 3, head 11 of valve 1 is arranged within a special seat 31 formed in transducer 3 or it leans onto a special surface of the transducer.

In order to stably associate the two components, both valve 1 and transducer 3 are traversed by a pierced screw 4.

Head 11 of valve 1 is thus axially pierced to allow the insertion of the pierced screw 4.

Valve 1 is equipped, in correspondence with head 11 and at least partially stem 18, with a threaded hole 114 to allow the screwing of the pierced screw 4.

Hole 114 is then provided with an internal thread 214 that extends for a defined axial length Lfi. By way of example, length Lfi is greater than 10 mm, for example it is about 12 mm.

The pierced screw 4 also comprises a shank 48 and a head 41.

Head 41 has for example a square, cylindrical or polygonal cross-section; in any case, head 41 is provided with shapes suitable for implementing a shape coupling with seat 31 formed in transducer 3. Head 41 is in fact inserted in the corresponding seat 31 provided on transducer 3.

Shank 48 of screw 4 is threaded to allow the screwing with valve 1. Shank 48 of screw 4 is then equipped with an external thread 414, which preferably extends throughout the length of shank 48, defined as Lg.

By way of example, length Lg is greater than 10 mm, for example it is about 15 mm.

Shank 48 of screw 4 is then screwed into the internal thread 214 of the body of valve 1.

Advantageously, length Lg of shank 48 is such as to allow the complete screwing of screw 4 in the threaded hole 114 of valve 1, i.e. the screwing of screw 4 by the entire length Lfi of the internal thread 214.

Preferably, length Lg of shank 48 is greater than length Lfi of the internal thread 214 (Lg>Lfi) to take account of the thickness of the sensor wall.

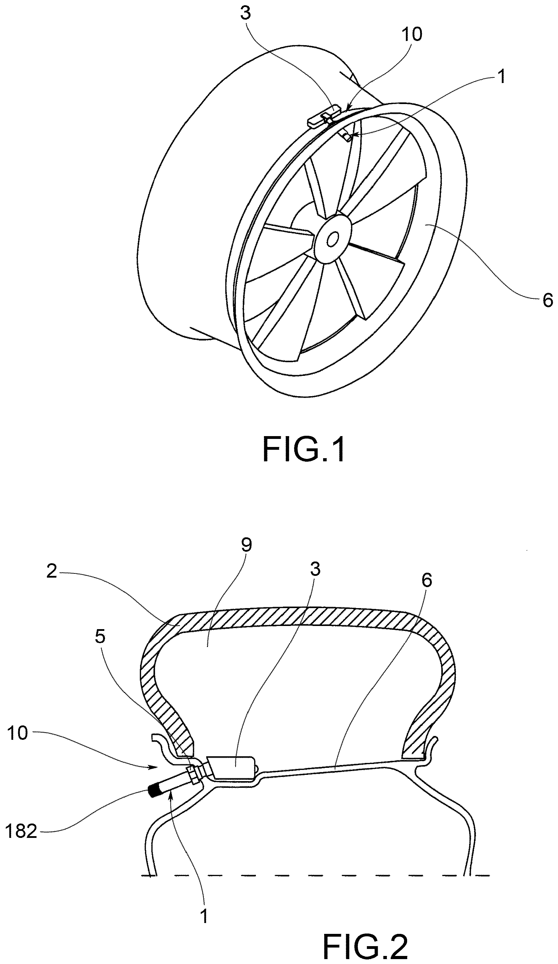

With particular reference to figures 1 and 2, there is shown a rim 6 of a wheel of a motor vehicle, on which the valve-transducer group 10 is mounted. As can be seen, transducer 3 is positioned inside volume 9 delimited by the relevant tyre 2, while valve 1 protrudes from rim 6.

Valve 1 is stably attached to rim 6 by means of a locking nut 5, screwed onto stem 18 below head 11.

Stem 18 below head 11 is externally threaded to allow tightening the locking nut 5.

Stem 18 is provided with an external thread 215 that extends for a defined axial length Lfe.

Advantageously, valve 1 comprises a reinforcement area 17 realized by means of an overlapping area (Ls) between the external thread 215 and the internal thread 214.

In other words, by observing the section of the valve (for example in figure 4 and 5) and starting from head 11, it is noted that the internal thread 214 continues axially inside hole 114 so as to go beyond the starting point of the external thread 215.

In yet other words, the terminal point Pt of the internal thread 214 is positioned axially beyond the initial point Pi of the external thread 215.

During the assembly of transducer 10 to the reinforced valve group, screw 4 is screwed by the entire length Lfi of the internal thread 214. During the assembly of the valve-transducer group 10 to rim 6, the locking nut 5 is screwed onto the external thread 215 of valve 1. Due to the overlap between the external thread 215 and the internal thread 214, in correspondence with the reinforcement area 17 there is an overlap between the locking nut 5, stem 18 of valve 1 and shank 48 of screw 4. This overlap of components thus constitutes a reinforcement for the valve-transducer group 10 when mounted to rim 6, precisely in correspondence with the critical zone in which breakages may occur in the prior art valves.

Advantageously, valve 1 is further through an enlargement of head 11.

In particular, diameter D of the head is increased compared to traditional valves, which reach 16 mm, for example, by bringing it to 16.5 mm.

Preferably, also the axial height H of the head can be increased compared to traditional valves.

Between the inner edge of rim 6 and the head portion 11 of valve 1 which abuts on the rim itself, a gasket seal 12 is interposed.

The gasket seal 12 may be of toroidal elastic (O-Ring) or shaped (Grommet) type.

Figure 6 shows an example of valve 1 with metal-to-metal seal. In this example, the seal is implemented through a seal shaped as an O-ring 121 positioned in a relative seat provided in head 11 of valve 1. The O-ring 121 works by compression occupying, by widening in the tightening step, the space of the seat. The reaction to the torque of the locking nut 5 that puts the valve body 1 in tension is exerted by the outermost edge of head 11, on which a significant specific pressure is concentrated. In this embodiment example, the tightening torque of the locking nut is about 12÷15 Nm.

Figure 8 shows an example of valve 1 with rubber-to-metal seal. In this example, the seal is implemented through a seal shaped as a shaped collar 122 (T-grommet) placed inside a seat 122' (similar to, but larger than that of the O-ring). The shaped collar 122 comprises an upper portion (protruding radially and housed in seat 122' in correspondence with head 11) and a lower portion (extended axially along stem 18 of valve 1). This shape of the shaped collar 122 causes the seal to be implemented both by the upper part and by the lower part, to fill any irregularities or defects in the hole of rim 6. Therefore, in this solution, the outer edge of head 11 does not go in direct contact with rim 6 and the tractive strain due to the locking nut 5 is fully supported by the compression of the shaped collar 122. In this embodiment example, the tightening torque of the locking nut is about 12-15 Nm.

Figure 9 also shows another example of valve 1 with rubber-to-metal seal. In this example, the seal is implemented through a seal shaped as a shaped collar 122 resting in abutment below head 11 of valve 1. In this solution, the shaped collar 122 is free to expand laterally squeezed by the screwing of the locking nut 5. The traction strain is completely absorbed by the shaped collar 122, which adapts to any irregularities in the hole of rim 6.

Therefore, in the case of valve 1 with "rubber-to-metal" seal, 12, the quality of seal 12 and in particular of the sealing rubber is critical, because it must not only seal but also support the compression stress over time by limiting the possible negative effects due to environmental conditions (such as excessive permanent deformation, cuts or fractures, early aging).

In a further alternative variant, head 11 of valve 1 can go in abutment, in direct contact without seals, on rim 6.

Preferably, between the outer edge of rim 6 and the locking nut 5, a washer (not shown) is interposed, made of metal or plastic.

The method of mounting the reinforced valve group 6 according to the invention on rim 6, in combination with a transducer 3 for TPMS technology, is described hereinafter.

The reinforced valve group is coupled to transducer 3 and held in place by screw 4. The valve-transducer group 10 is then positioned on rim 6, taking care to arrange transducer 3 tangent to the inner edge of rim 6 and stem 18 of valve 1 projecting outside the rim itself. At this point, group 10 must be tightened on rim 6 by tightening nut 5, which slides along the external thread 215 provided on stem 8 of valve 1 up to position itself in abutment on rim 6, with the interposition of a washer. At this point, all components are coupled together in a stable manner.

In the reinforced valve group according to the present invention, instead, the portion of internal thread 214 is elongated and made to go up within hole 114 at the portion of external thread 215. In particular, the reinforced valve group has an overlapping area Ls between the external thread 215 and the internal thread 214. In this way, the internal screw 4 during the screwing goes up at the external thread 215 and acts as a support and reinforcement in the most critical point.

The object of the present invention is a reinforced valve group for inflating tyres, suitable to be stably associated to a transducer for TPMS technology. Such a reinforced valve group comprises a valve provided with a head 11 below which extends a stem 18. Valve 1 is provided:
- in correspondence of head 11 and at least partially of stem 18, with a hole 114 provided with an internal thread 214;
- in correspondence of stem 18, below head 11, with an external thread 215.

The reinforced valve group comprises a locking nut 5, screwed on the external thread 215 of stem 18 of valve 1, and a reinforcement area 17 formed by an overlapping portion Ls between the external thread 215 and the internal thread 214, so that, once screwed, the locking nut 5 overlaps at least partially the internal thread 214.

The reinforced valve group further comprises a screw 4 equipped with:
- a head 41 suitable to realise the fastening with a transducer;
- a step 48 suitable to realise the fastening with valve 1.

Shank 48 of screw 4 is equipped with an external thread 414 for screwing into the threaded hole 114 of valve 1.

Therefore, screw 4 is screwable in valve 1 in such a way that, in correspondence of the reinforcement area 17, there is an overlap between the locking nut 5, stem 18 of valve 1 and shank 48 of screw 4.

Innovatively, a reinforced valve group according to the present invention is particularly reliable and has a high fatigue and traction resistance.

Advantageously, a reinforced valve group according to the present invention well withstands the opposing tensile forces exerted respectively by the fastening screw of the transducer and by the locking nut.

Advantageously, a reinforced valve group according to the present invention is particularly suitable for inflating tyres of rubber wheels of trucks.

A man skilled in the art may make several changes and adjustments to the reinforced valve group described above in order to meet specific and incidental needs, all falling within the scope of protection defined in the following claims.

## Claims

1. Reinforced valve group for inflating tyres, suitable to be stably associated to a transducer for TPMS technology, comprising:
a valve fitted with a head (11) below which extends a stem (18), said valve (1) being provided:
- in correspondence of the head (11) and at least partially of the stem (18), with a hole (114) provided with an internal thread (214) that extends for a defined axial length (Lfi);
- in correspondence of the stem (18), below the head (11), with an external thread (215);
- a locking nut (5), screwed on the external thread (215) of the stem (18) of the valve (1);
**characterised in that** it comprises a reinforcement area (17) formed by an overlapping portion (Ls) between the external thread (215) and the internal thread (214), so that, once screwed, the locking nut (5) overlaps at least partially the internal thread (214).

2. Reinforced valve group according to claim 1, further comprising a screw (4) equipped with:
- a head (41) suitable to realise the fastening with a transducer;
- a shank (48) suitable realise the fastening with the valve (1), said shank (48) being provided with an external thread (414) for the screwing of the screw (4) inside the threaded hole (114) of the valve (1);
wherein the screw (4) is screwable in the valve (1) in such a way that, in correspondence of the reinforcement area (17), there is an overlap between the locking nut (5), the stem (18) of the valve (1) and the shank (48) of the screw (4).

3. Reinforced valve group according to claim 2, wherein the length of the shank (48) is defined (Lg) and is such as to allow the screwing of the screw (4) for the entire length (Lfi) of the internal thread (214).

4. Reinforced valve group according to claim 2 or 3, wherein the length (Lg) of the shank (48) is greater than the length (Lfi) of the internal thread (214).

5. Reinforced valve group according to any of the preceding claims, wherein the internal thread (214) continues axially inside the hole (114) in such a way that the terminal point (Pt) of the internal thread (214) is positioned axially beyond the initial point (Pi) of the external thread (215).

6. Reinforced valve group according to any of the preceding claims, wherein the stem (18) comprises a terminal portion provided with a mechanism (180) for the inflation/deflation of the tyre.

7. Reinforced valve group according to any of the preceding claims, provided with a gasket seal (12) realised through an O-ring (121) positioned in a specific seat provided in the head (11).

8. Reinforced valve group according to any of claims 1 to 6, provided with a gasket seal (12) realised through a shaped collar (122) comprising an upper portion protruding radially, housed in a specific seat (122') provided in the head (11) or resting in abutment below the head (11), and a lower portion, extended axially along the stem (18).

9. Transducer-valve group (10) comprising:
- a reinforced valve group according to any of the preceding claims;
- a transducer (3) for TPMS technology fixed to the valve (1) of the reinforced valve group with the screw (4).
